# EUROPÄISCHE PATENTSCHRIFT

(11) **EP 2 217 893 B1**
(45) Veröffentlichungstag und Bekanntmachung des Hinweises auf die Patenterteilung: **03.02.2021**
(21) Anmeldenummer: 08861814.5
(22) Anmeldetag: 12.12.2008
(51) Int. Cl.: G01F 23/296, H01H 47/04

(54) **VORRICHTUNG ZUR BESTIMMUNG UND/ODER ÜBERWACHUNG EINER PROZESSGRÖSSE**
DEVICE FOR DETERMINING AND/OR MONITORING A PROCESS PARAMETER
DISPOSITIF DE DÉTERMINATION ET/OU DE SURVEILLANCE D'UN PARAMÈTRE DE PROCÉDÉ

(30) Priorität: 15.12.2007 DE 102007061180
(43) Veröffentlichungstag der Anmeldung: 18.08.2010
(73) Patentinhaber: Endress+Hauser SE+Co. KG, 79689 Maulburg (DE)
(72) Erfinder: BRUTSCHIN, Wolfgang, 79650 Schopfheim (DE); RUF, Klaus, 79618 Rheinfelden (DE)
(74) Vertreter: Andres, Angelika Maria
(86) Internationale Anmeldenummer: PCT/EP2008/067368
(87) Internationale Veröffentlichungsnummer: WO 2009/077432

(56) Entgegenhaltungen:
- DE-A1- 3 843 339
- DE-A1- 10 125 210
- DE-C1- 4 026 427
- US-A- 3 585 457
- US-A- 5 999 396

## Beschreibung

Die Erfindung bezieht sich auf eine Vorrichtung zur Bestimmung und/oder Überwachung mindestens einer Prozessgröße, mit mindestens einem Relais, und mit mindestens einer Spannungsquelle. Bei der Prozessgröße handelt es sich beispielsweise um den Füllstand, die Dichte, die Viskosität, den Druck, den Durchfluss, den pH-Wert oder die Temperatur.

Eine derartige Vorrichtung ist z.B. aus der Schrift US 3 585 457 A1 bekannt.

Bei Messgeräten der Prozess- und Automatisierungsgeräten werden gelegentlich Relais' verwendet, um das Vorliegen von Schaltzuständen oder Betriebszuständen zu signalisieren.

Aus den Schriften DE 40 26 427 C1 und US-A-5 999 396 ist bekannt, dass zwecks Energieeinsparung die Haltespannung eines Relais bis unterhalb seiner Ansprechspannung reduziert werden kann.

Eine Grundanforderung für die Entwicklung von elektronischen Schaltungen ist stets eine gute Leistungsbilanz, d.h. eine möglichst geringe Verlustleistung. Bei der Ansteuerung eines Relais lässt sich verhältnismäßig viel Verlustleistung einsparen. Das Relais benötigt zwar eine Anzugsspannung, die der Nennspannung des Relais entspricht, aber um das Relais im Anzugszustand zu halten, wird eine viel geringere Spannung, die so genannte Haltespannung, benötigt.
Dies wird deutlich an einem einfachen Beispiel. Es sei ein Relais gegeben mit einer Nennspannung von 24 V und einem Widerstand von 1600 Ω. Um das Relais sicher in den angezogenen Zustand zu bringen, steuert man das Relais mit 24 V an. Daraus resultiert ein Strom von 24 V / 1600 Ω = 15 mA. Damit verbunden ist eine Verlustleistung von P = 15 mA ^{∗} 24 V = 360 mW.
Um diese Verlustleistung zu verringern, wird oft eine so genannte Halteschaltung verwendet, bei der der Strom entsprechend dem Haltestrom verringert wird. Die hohe Spannung von 24 V bleibt jedoch erhalten, so dass diese Spannung sich auf andere Schaltungsteile immer noch negativ bezüglich der Leistungsbilanz auswirkt. Dies ist vor allem bei nachgeschalteten Linearreglern der Fall.

Der Erfindung liegt die Aufgabe zugrunde, eine Ansteuerung für ein Relais vorzuschlagen, bei welcher die Verlustleistung reduziert ist.

Die Aufgabe wird erfindungsgemäß durch eine Vorrichtung zur Bestimmung und/oder Überwachung mindestens einer Prozessgröße gelöst,
mit mindestens einem Relais,
mit mindestens einer Spannungsquelle, und
mit mindestens einer Spannungserhöhungseinheit, wobei die Spannungserhöhungseinheit zwischen der Spannungsquelle und dem Relais angeordnet ist und wobei die Spannungsquelle, die Spannungserhöhungseinheit und das Relais in Reihe geschaltet sind, wobei das Relais, die Spannungsquelle und die Spannungserhöhungseinheit derartig ausgestaltet, aufeinander abgestimmt und miteinander verbunden sind, dass in dem Fall, dass die Spannungsquelle das Relais für das Anziehen des Relais mit einer Spannung versorgt, die Spannungserhöhungseinheit eine solche Erhöhung der am Relais anliegenden Spannung bewirkt, dass die anliegende Spannung zumindest der Anzugsspannung des Relais entspricht, dadurch gekennzeichnet,
dass das Relais und die Spannungsquelle derartig ausgestaltet und aufeinander abgestimmt sind, dass die Spannung, mit welcher die Spannungsquelle das Relais im Haltefall beaufschlagt, kleiner als die Anzugsspannung des Relais, aber zumindest gleich der Haltespannung des Relais ist, und
die Spannungserhöhungseinheit mindestens einen elektrischen Schwingkreis oder mindestens eine Spannungsspeichereinheit aufweist.

Die Erfindung sieht vor, dass das Relais und die Spannungsquelle derartig ausgestaltet und aufeinander abgestimmt sind, dass mindestens die Spannung, mit welcher die Spannungsquelle das Relais im Anzugsfall versorgt, unterhalb der Anzugsspannung des Relais liegt. Damit geht einher, dass die Spannungserhöhungseinheit derartig ausgestaltet ist, dass die von ihr erzeugte Spannungserhöhung bewirkt, dass die am Relais im Moment des Anziehens des Relais anliegende Spannung oberhalb der Anzugsspannung bzw. Nennspannung des Relais liegt. Gemäß der Erfindung ist insbesondere die Spannung, mit welcher die Spannungsquelle das Relais im Haltefall, d.h. nach dem Anziehen des Relais und somit im geschlossenen Zustand beaufschlagt, kleiner als die Anzugsspannung, aber zumindest gleich der Haltespannung. Dadurch liegt auch die Verlustleistung niedriger.

Bei der erfindungsgemäßen Vorrichtung liegt somit die Spannung der Spannungsquelle sowohl am Relais, als auch an der Spannungserhöhungseinheit an. Somit lässt sich für den Anzugsmoment eine Spannungserhöhung am Relais erzielen.

Eine Ausgestaltung beinhaltet, dass die Spannungserhöhungseinheit mindestens einen elektrischen Schwingkreis aufweist, und es sich bei dem Schwingkreis um einen LC-Schwingkreis handelt.

In einer Variante wird somit ein Schwingkreis als Speicher für die elektrische Spannung verwendet, welche entsprechend dem Einschwingverhalten des Schwingkreises an das Relais übermittelt wird. In einer Ausgestaltung ist dabei die Spannungsquelle mit dem Schwingkreis und dem Relais verbunden. In einer alternativen Ausgestaltung ist der Schwingkreis mit einer zusätzlichen Spannungsquelle kontaktiert.

Eine Ausgestaltung beinhaltet, dass die Spannungserhöhungseinheit mindestens eine Spannungsspeichereinheit aufweist, und die Spannungsspeichereinheit derartig ausgestaltet und angeordnet ist, dass im Anzugsfall des Relais die Spannungsquelle und die Spannungsspeichereinheit in Reihe geschaltet sind.

Eine Ausgestaltung sieht vor, dass die Spannungserhöhungseinheit mindestens eine Spannungsspeichereinheit aufweist, und die Spannungsspeichereinheit mindestens einen Kondensator aufweist.

Für alle Ausgestaltungen lässt sich somit formulieren:
Die Erfindung reduziert die Verlustleistung, indem eine geringere Spannung als Betriebsspannung, d.h. für den Haltezustand, benutzt und indem die Spannung für die Relais im Anzugsmoment auf die geforderte Nennspannung durch die jeweilige Spannungserhöhungseinheit erhöht wird.

Eine Ausgestaltung sieht vor, dass mindestens ein erstes Relais und mindestens eine erste Spannungserhöhungseinheit vorhanden sind, dass mindestens ein zweites Relais und mindestens eine zweite Spannungserhöhungseinheit vorhanden sind, und dass die erste Spannungserhöhungseinheit und die zweite Spannungserhöhungseinheit unterschiedlich ausgestaltet sind. In dieser Ausgestaltung verfügt das Messgerät über zwei Relais, die entweder unterschiedliche Zustände signalisieren oder den gleichen Zustand redundant. Für sicherheitsgerichtete Anwendungen kann es erforderlich sein, dass wesentliche Bestandteile eines Feldgerätes redundant und diversitär ausgestaltet sind. In dieser Ausgestaltung der Vorrichtung zur Bestimmung und/oder Überwachung einer Prozessgröße sind die beiden Relais jeweils mit einer Spannungserhöhungseinheit verbunden, welche unterschiedlich ausgestaltet, also diversitär sind. Insbesondere setzen die Spannungserhöhungseinheiten jeweils eine andere Methode zur Erhöhung der Spannung um. Beispielsweise weist eine Spannungserhöhungseinheit den oben diskutierten Schwingkreis nach mindestens einer Ausgestaltung auf und die zweite Spannungserhöhungseinheit verfügt über die oben genannte Spannungsspeichereinheit. In der einen Variante wird somit das Einschwingverhalten des Schwingkreises und in der anderen Variante die Addition der Kondensatorspannung verwendet, um eine Spannungserhöhung am Relais zu erzeugen.

Die Erfindung wird anhand der nachfolgenden Zeichnungen näher erläutert. Es zeigt:
Fig. 1: ein Blockschaltbild einiger Bestandteile der erfindungsgemäßen Vorrichtung einer ersten Variante der Spannungserhöhungseinheit,
Fig. 2: eine detaillierte Darstellung der Schaltung der ersten Variante,
Fig. 3: die zweite Variante zur Spannungserhöhung mit einem abgefallenen Relais,
Fig. 4: die Ausgestaltung der Fig. 3 mit einem angezogenen Relais, und
Fig. 5: ein Teil eines erfindungsgemäßen Messgerätes mit zwei Relais'.

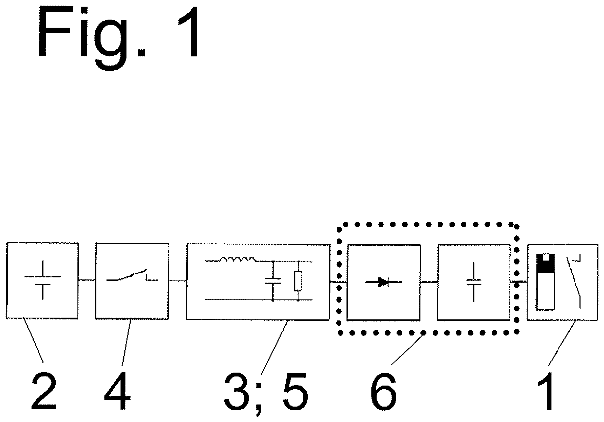

In der Fig. 1 ist ein Blockschaltbild der Schaltung dargestellt. Die weiteren Komponenten der Vorrichtung zur Bestimmung und/oder Überwachung einer Prozessgröße, wie beispielsweise die eigentliche Sensoreinheit sind nicht dargestellt.

Die Spannungsquelle 2 ist über einen Schalter 4 mit dem Relais 1 verbunden. Ergibt sich beispielsweise aus der Messung der Prozessgröße, dass ein Grenzwert überschritten wurde, so wird das Relais 1 durch das Betätigen des Schalters 4 angezogen. Handelt es sich bei der Prozessgröße beispielsweise um den Füllstand eines Mediums - z.B. einer Flüssigkeit oder eines Schüttgutes - in einem Behälter, und handelt es sich bei der Sensoreinheit um eine Schwinggabel, um einen Einstab oder um einen Membranschwinger, so kann beispielsweise das Überschreiten eines Füllstandes durch die Auswertung der Kenngrößen der Schwingungen der Sensoreinheit erkannt werden.

Das Relais 1 wird dadurch angezogen, dass an es eine Spannung angelegt wird, welche gleich oder größer seiner Nennspannung bzw. seiner Anzugsspannung ist. Um den Verlust am Relais 1 im Haltezustand zu verringern, ist die Spannungsquelle 2 derartig auf das Relais 1 abgestimmt, dass die Spannung, mit welcher die Quelle 2 das Relais 1 versorgt, unterhalb dessen Anzugsspannung liegt.

Damit das Relais 1 im Anzugsmoment dennoch anzieht, ist hier der Schwingkreis 3 als Spannungserhöhungseinheit 5 vorgesehen, bei welchem es sich hier um einen LC-Schwingkreis mit einer Spule, einem Kondensator und einem Widerstand handelt. Die Spule und der Kondensator sind dabei in Reihe geschaltet. Der Widerstand ist parallel zum Kondensator angeordnet. Dieser Schwingkreis 3 ist ebenfalls mit der Spannungsquelle 2 verbunden und liegt in Reihe zwischen der Quelle 2 und dem Relais 1. Dadurch liegt die Spannung der Spannungsquelle 2 sowohl am Relais 1, als auch an der Spannungserhöhungseinheit 5, d.h. im Idealfall kommt es zu einer Spannungsverdopplung am Relais 1. Hinter dem Schwingkreis 3 ist noch ein Gleichrichter 6, bestehend aus einer Sperrdiode und einem Glättungskondensator vorgesehen, welcher aus dem oszillierenden Signal des Schwingkreises 2 ein glatte Kurve erzeugt, welcher entsprechend der Dämpfung des Schwingkreises 3 in der Amplitude abfällt.

In dieser Ausgestaltung der Fig. 1 wird somit das Einschwingverhalten eines LC-Schwingkreises ausgenutzt. Durch richtige Wahl der Bauteile wird beim Einschalten der Spannung der Schwingkreis angeregt und beginnt zu oszillieren. Durch die nachgeschaltete Gleichrichtung wird der Gleichanteil über eine Kapazität gesiebt und dem Relais als Anzugsspannung zugeführt. Durch entsprechende Dimensionierung kann die Amplitude und Einschwingdauer entsprechend den Anforderungen für das Schaltverhalten des Relais optimiert werden. Die Schwingfrequenz des Schwingkreises 3 ist insbesondere auf die Trägheit des Relais 1 abgestimmt. Für das Anziehen des Relais 1 wird insbesondere nur ein Impuls verwendet.

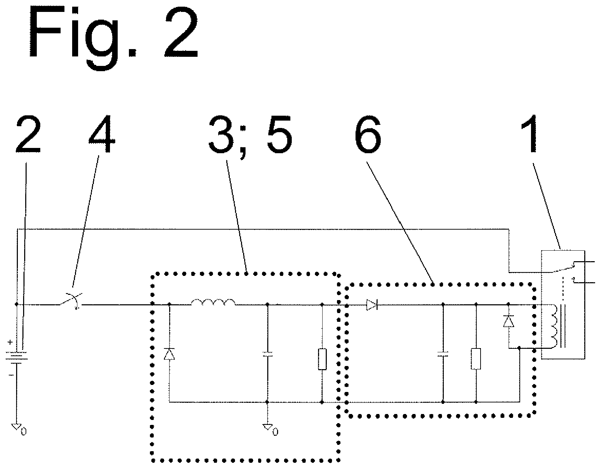

In der Fig. 2 sind die einzelnen Bauteile der Schaltung der Fig. 1 detailliert dargestellt. Die Spannungsquelle 2 und der Schwingkreis 3 sind hier mit dem gleichen Bezugspotential Masse verbunden. In dem Schwingkreis ist zwischen dem Schalter 4 und der Spule noch eine Diode angeordnet, welche als Freilaufdiode geschaltet und für das Abschaltmoment von Bedeutung ist. Der Gleichrichter 6 erzeugt aus dem Schwingungssignal des Schwingkreises über zwei Dioden, einen Kondensator und einen Widerstand ein geglättetes Signal. Die maximale Amplitude ergibt sich dabei in dem Moment, in welchem der Schalter 4 geschlossen ist, d.h. in dem Augenblick, in welchem das Relais 1 anziehen soll. Durch die Dämpfung wird die Spannung dann kleiner. Die Dämpfung und die Resonanzfrequenz sind dabei so zu wählen, dass das Relais 1 gut und zuverlässig schalten kann. Ein Vorteil dieser Variante liegt darin, dass im Wesentlichen nur ein Schalter für die Erzeugung der Spannungserhöhung erforderlich ist, wobei es sich insbesondere um den Schalter handelt, welcher bereits für das Schalten des Relais erforderlich ist.

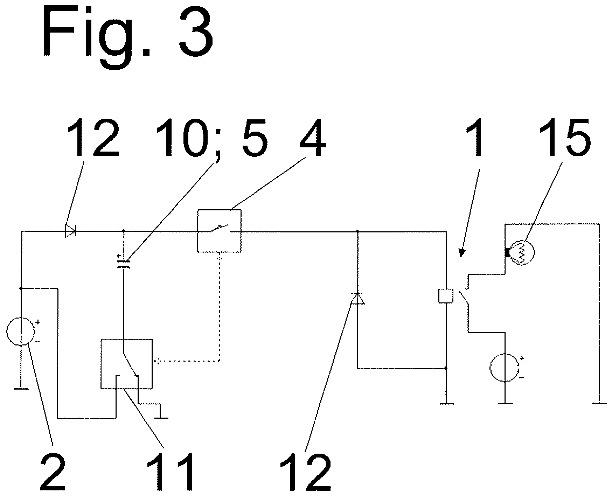

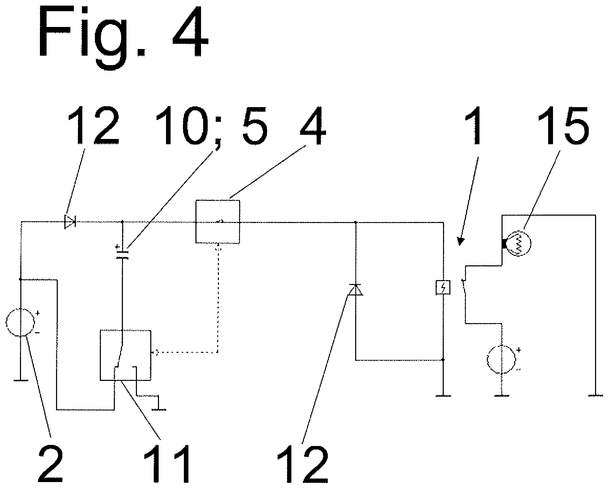

In den Figuren Fig. 3 und Fig. 4 ist eine zweite Variante der Spannungserhöhungseinheit 5 dargestellt.

Für die Spannungserhöhungseinheit 5 ist hier eine Spannungsspeichereinheit 10 vorgesehen, bei welcher es sich hier konkret um einen Kondensator handelt. Der Kondensator 10 ist hier zum einen mit der Spannungsquelle 2 und zum anderen mit einem Bezugspotential verbunden. Der Schalter 4 zum Relais 1 ist in der Fig. 3 geöffnet. Die Spannungsquelle 2, der Kondensator 10 und das Relais 1 sind in Reihe geschaltet. Hinter dem Relais 1 ist noch eine LED 15 vorgesehen, welche dem Betrachter optisch anzeigt, ob das Relais geschaltet ist. In der Fig. 4 ist der Schalter 4 zum Relais 1 geschlossen, d.h. es ist beispielsweise ein Füllstand durch ein Medium erreicht worden oder ein anderer Zustand ist aufgetreten, welcher über das Schalten des Relais 1 zu signalisieren ist. Verbunden mit dem Schalter 4 ist der Umladeschalter 11, welcher den Kondensator 10 mit der Spannungsquelle 2 verbindet. D.h. die Spannungsquelle 2 und der Kondensator 10 werden in Reihe geschaltet und entsprechend die Summe beider Spannungen liegt am Relais an, welches anzieht und hier die LED 15 beispielsweise zum Leuchten bringt. In einer alternaiven Ausgestaltung wird der Kondensator 10 mit einer zusätzlichen Spannungsquelle verbunden, so dass sich in Summe auch eine andere Spannung für das Relais 1 ergibt.

Diese zweite Variante der Spannungserhöhung lässt sich auch wie folgt beschreiben: Der Kondensator 10 liegt über eine Entkoppeldiode 12 an der Betriebsspannung der Spannungsquelle 2 und wird auf diese Spannung aufgeladen. Das Relais 1 ist abgefallen (Fig. 3). Durch ein entsprechendes Sensorsignal wird zum einen die Relaisansteuerung aktiviert. Gleichzeitig wird der Umschalter 11 geschaltet, so dass der Fußpunkt des Kondensators 11 an der Spannungsquelle anliegt. Dadurch addieren sich die Spannung des Kondensators 10 und die Spannung der Spannungsquelle 2. Ist das Relais 1 eingeschaltet, wird der Kondensator 10 bis auf die Differenz zwischen der Versorgungsspannung und der Spannung, die an der Diode 12 abfällt, entladen. Diese Haltespannung reicht aus, um das Relais 1 sicher im angezogenen Zustand zu halten. Bringt das Eingangssignal das Relais 1 zum Abfallen, wird der Umschalter 11 wieder in die Position gebracht, in welcher der Kondensator 10 mit dem Bezugspotential Masse verbunden ist, wodurch sich der Kondensator 10 auch wieder aufladen kann. Der Spannungsimpuls am Relais 1 ist abhängig von der Ladekapazität 10 sowie dem Entladestrom durch das Relais 1. Insgesamt sollte ein Spannungsimpuls zwischen ca. 20 ms und 50 ms einstellen. Diese Zeit reicht aus, um das Relais 1 sicher zu schalten. Durch die Schaltung der Figuren 3 und 4 kann eine geringe Betriebsspannung gewählt werden. Im günstigsten Fall die halbe Nennspannung des Relais 1. In dieser zweiten Variante sind zwei Schalter erforderlich.

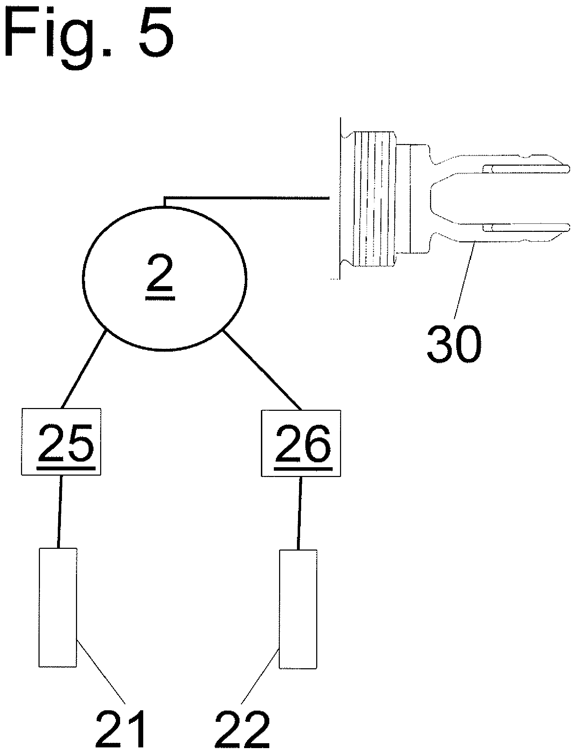

In der Fig. 5 ist ein Teil der erfindungsgemäßen Vorrichtung dargestellt. Als Sensoreinheit 30 ist hier beispielsweise eine Schwinggabel vorgesehen, welcher der Bestimmung bzw. Überwachung von solchen Prozessgrößen wie beispielsweise Füllstand, Dichte oder Viskosität dient.
Die Spannungsquelle 2 ist hier mit zwei Relais' 21, 22 verbunden. Diese zeigen beispielsweise zwei unterschiedliche Schaltzustände oder jeweils den gleichen Schaltzustand an. Die Relais' können auch einer Anzeige eines Betriebszustandes des Messgerätes dienen.

Jedes Relais 21, 22 ist mit einer eigenen Spannungserhöhungseinheit 25, 26 verbunden. Dabei ist beispielsweise die erste Spannungserhöhungseinheit 25 nach der oben genannten ersten Variante ausgeführt, d.h. ein Schwingkreis dient der Spannungserhöhung, und die zweite Spannungserhöhungseinheit 26 weist den entsprechend geschalteten Kondensator als Spannungsspeichereinheit auf.

### Bezugszeichenliste

- 1: Relais
- 2: Spannungsquelle
- 3: Schwingkreis
- 4: Schalter
- 5: Spannungserhöhungseinheit
- 6: Gleichrichter
- 10: Spannungsspeichereinheit
- 11: Umladeschalter
- 12: Diode
- 15: LED
- 21: Erstes Relais
- 22: Zweites Relais
- 25: Erste Spannungserhöhungseinheit
- 26: Zweite Spannungserhöhungseinheit
- 30: Sensoreinheit

## Patentansprüche

1. Vorrichtung zur Bestimmung und/oder Überwachung mindestens einer Prozessgröße,
mit mindestens einem Relais (1, 21, 22),
mit mindestens einer Spannungsquelle (2), und
mit mindestens einer Spannungserhöhungseinheit (5, 10, 25, 26), wobei die Spannungserhöhungseinheit (5, 10, 25, 26) zwischen der Spannungsquelle (2) und dem Relais (1, 21, 22) angeordnet ist und wobei die Spannungsquelle (2), die Spannungserhöhungseinheit (5, 10, 25, 26) und das Relais (1, 21, 22) in Reihe geschaltet sind,
wobei das Relais (1, 21, 22), die Spannungsquelle (2) und die Spannungserhöhungseinheit (5, 10, 25, 26) derartig ausgestaltet, aufeinander abgestimmt und miteinander verbunden sind, dass in dem Fall, dass die Spannungsquelle (2) das Relais (1, 21, 22) für das Anziehen des Relais (1, 21, 22) mit einer Spannung versorgt, die Spannungserhöhungseinheit (5, 10, 25, 26) eine solche Erhöhung der am Relais (1, 21, 22) anliegenden Spannung bewirkt, dass die anliegende Spannung zumindest der Anzugsspannung des Relais (1, 21, 22) entspricht,
**dadurch gekennzeichnet,**
**dass** das Relais (1, 21, 22) und die Spannungsquelle (2) derartig ausgestaltet und aufeinander abgestimmt sind, dass die Spannung, mit welcher die Spannungsquelle (2) das Relais (1, 21, 22) im Haltefall beaufschlagt, kleiner als die Anzugsspannung des Relais (1, 21, 22), aber zumindest gleich der Haltespannung des Relais (1, 21, 22) ist, und
die Spannungserhöhungseinheit (5, 10, 25, 26) mindestens einen elektrischen Schwingkreis (3) oder mindestens eine Spannungsspeichereinheit (10) aufweist.

2. Vorrichtung nach Anspruch 1,
**dadurch gekennzeichnet,**
**dass** die Spannungserhöhungseinheit (5, 10, 25, 26) mindestens einen elektrischen Schwingkreis (3) aufweist, und es sich bei dem Schwingkreis (3) um einen LC-Schwingkreis handelt.

3. Vorrichtung nach Anspruch 1,
**dadurch gekennzeichnet,**
**dass** die Spannungserhöhungseinheit (5, 10, 25, 26) mindestens eine Spannungsspeichereinheit (10) aufweist, und die Spannungsspeichereinheit (10) derartig ausgestaltet und angeordnet ist, dass im Anzugsfall des Relais (1, 21, 22) die Spannungsquelle (2) und die Spannungsspeichereinheit (10) in Reihe geschaltet sind.

4. Vorrichtung nach Anspruch 1 oder 3,
**dadurch gekennzeichnet,**
**dass** die Spannungserhöhungseinheit (5, 10, 25, 26) mindestens eine Spannungsspeichereinheit (10) aufweist, und die Spannungsspeichereinheit (10) mindestens einen Kondensator aufweist.

5. Vorrichtung nach einem der Ansprüche 1 bis 4,
**dadurch gekennzeichnet,**
**dass** mindestens ein erstes Relais (21) und mindestens eine erste Spannungserhöhungseinheit (25) vorhanden sind,
**dass** mindestens ein zweites Relais (22) und mindestens eine zweite Spannungserhöhungseinheit (26) vorhanden sind,
und
**dass** die erste Spannungserhöhungseinheit (25) und die zweite Spannungserhöhungseinheit (26) unterschiedlich ausgestaltet sind.

## Claims

1. Apparatus for determining and/or monitoring at least a process variable,
with at least a relay (1, 21, 22),
with at least a voltage source (2), and
with at least a voltage increase unit (5, 10, 25, 26), wherein said voltage increase unit (5, 10, 25, 26) is arranged between the voltage source (2) and the relay (1, 21, 22) and wherein the voltage source (2), voltage increase unit (5, 10, 25, 26) and the relay are switched in series,
wherein the relay (1, 21, 22), the voltage source (2) and the voltage increase unit (5, 10, 25, 26) are designed, harmonized with one another and connected to one another in such a way that in the event that the voltage source (2) supplies the relay (1, 21, 22) with a voltage for the purpose of energizing the relay (1, 21, 22), the voltage increase unit (5, 10, 25, 26) causes the voltage present at the relay (1, 21, 22) to increase to the extent that the voltage applied corresponds at least to the energizing voltage of the relay (1, 21, 22),
**characterized in that**
the relay (1, 21, 22) and the voltage source (2) are designed and harmonized with one another in such a way that the voltage which the voltage source (2) supplies to the relay (1, 21, 22) in the event of a hold is less than the energizing voltage of the relay (1, 21, 22) but at least equal to the holding voltage of the relay (1, 21, 22), and
**in that** the voltage increase unit (5, 10, 25, 26) comprises at least an electrical oscillating circuit (3) or at least a voltage storage unit (10).

2. Apparatus as claimed in Claim 1,
**characterized in that**
the voltage increase unit (5, 10, 25, 26) comprises at least an electrical oscillating circuit (3) and **in that** the oscillating circuit (3) is an LC oscillating circuit.

3. Apparatus as claimed in Claim 1,
**characterized in that**
the voltage increase unit (5, 10, 25, 26) comprises at least a voltage storage unit (10), and **in that** the voltage storage unit (10) is designed and arranged in such a way that in the event that the relay energizes (1, 21, 22), the voltage source (2) and the voltage storage unit (10) are switched in series.

4. Apparatus as claimed in Claim 1 or 3,
**characterized in that**
the voltage increase unit (5, 10, 25, 26) comprises at least a voltage storage unit (10), and **in that** the voltage storage unit (10) comprises at least a capacitor.

5. Apparatus as claimed in one of the Claims 1 to 4,
**characterized in that**
at least a first relay (21) and at least a first voltage increase unit (25) are provided, at least a second relay (22) and at least a second voltage increase unit (26) are provided,
and
**in that** the first voltage increase unit (25) and the second voltage increase unit (26) have a different design.

## Revendications

1. Dispositif destiné à la détermination et/ou la surveillance d'au moins une grandeur de process,
avec au moins un relais (1, 21, 22),
avec au moins une source de tension (2), et
avec au moins une unité d'augmentation de tension (5, 10, 25, 26), l'unité d'augmentation de tension (5, 10, 25, 26) étant disposée entre la source de tension (2) et le relais (1, 21, 22) et la source de tension (2), l'unité d'augmentation de tension (5, 10, 25, 26) et le relais étant couplés en série, dispositif pour lequel le relais (1, 21, 22), la source de tension (2) et l'unité d'augmentation de tension (5, 10, 25, 26) sont conçus, assortis les uns aux autres et reliés entre eux de telle sorte que dans le cas où la source de tension (2) alimente avec une tension le relais (1, 21, 22) pour l'excitation du relais (1, 21, 22), l'unité d'augmentation de tension (5, 10, 25, 26) provoque une telle augmentation de la tension présente aux bornes du relais (1, 21, 22) que la tension présente correspond au moins à la tension d'excitation du relais (1, 21, 22),
**caractérisé**
**en ce que** le relais (1, 21, 22) et la source de tension (2) sont conçus et assortis l'une à l'autre de telle sorte que la tension, avec laquelle la source de tension (2) alimente le relais (1, 21, 22) en cas de maintien, est inférieure à la tension d'excitation du relais (1, 21, 22), mais au moins égale à la tension de maintien du relais (1, 21, 22), et
**en ce que** l'unité d'augmentation de tension (5, 10, 25, 26) comprend au moins un circuit oscillant électrique (3) ou au moins une unité de stockage de tension (10).

2. Dispositif selon la revendication 1,
**caractérisé**
**en ce que** l'unité d'augmentation de tension (5, 10, 25, 26) comprend au minimum un circuit oscillant électrique (3) et, concernant le circuit oscillant (3), il s'agit d'un circuit oscillant LC.

3. Dispositif selon la revendication 1,
**caractérisé**
**en ce que** l'unité d'augmentation de tension (5, 10, 25, 26) comprend au moins une unité de stockage de tension (10), et en ce que l'unité de stockage de tension (10) est conçue et disposée de telle sorte qu'en cas d'excitation du relais (1, 21, 22), la source de tension (2) et l'unité de stockage de tension (10) sont couplées en série.

4. Dispositif selon la revendication 1 ou 3,
**caractérisé**
**en ce que** l'unité d'augmentation de tension (5, 10, 25, 26) comprend au minimum une unité de stockage de tension (10), et en ce que l'unité de stockage de tension (10) comprend au minimum un condensateur.

5. Dispositif selon l'une des revendications 1 à 4,
**caractérisé**
**en ce qu'**au moins un premier relais (21) et au moins une première unité d'augmentation de tension (25) sont présents,
**en ce qu'**au moins un deuxième relais (22) et au moins une deuxième unité d'augmentation de tension (26) sont présents,
et
**en ce que** la première unité d'augmentation de tension (25) et la deuxième unité d'augmentation de tension (26) sont de conception différente.
